# EUROPEAN PATENT SPECIFICATION

(11) **EP 2 282 412 B1**
(45) Date of publication and mention of the grant of the patent: **19.12.2012**
(21) Application number: 09166149.6
(22) Date of filing: 22.07.2009
(51) Int. Cl.: H04B 5/00

(54) **Adaptation of a directional characteristic of a radio signal based on the spatial orientation of a radio transmitter**
Anpassung einer Richtungseigenschaft eines Funksignals auf Grundlage der Raumausrichtung eines Funksenders
Adaptation d'une caractéristique directionnelle d'un signal radio à base de l'orientation spatiale d'un transmetteur radio

(43) Date of publication of application: 09.02.2011
(73) Proprietor: NXP B.V., 5656 AG Eindhoven (NL)
(72) Inventor: Thoen, Steven Mark, Surrey Redhill, RH1 1DL (GB)
(74) Representative: Williamson, Paul Lewis

(56) References cited:
- EP-A1- 1 947 423
- US-A- 5 600 330
- US-A1- 2007 290 846

## Description

### FIELD OF THE INVENTION

The present invention generally relates to the technical field of radio communication between a radio transmitter having at least one transmit coil and a radio receiver having at least one receive coil. Specifically, the present invention relates to a transmitter for transmitting a radio signal to a receiver, wherein the transmitter comprises at least one transmit coil. The present invention relates further to a receiver for receiving a radio signal from a transmitter, wherein the receiver comprises at least one receive coil. Further, the present invention relates to a communication system, which comprises the above described transmitter and/or the above described receiver. Furthermore, the present invention relates to a corresponding radio communication method, in particular to a unidirectional communication method.

### BACKGROUND OF THE INVENTION

Radio communication between different electronic products such as for instance consumer electronic devices is becoming more and more relevant in modem life. Users are often not willing to handle a plurality of wired cable connections between different electronic products, which are placed in their close surrounding. Therefore, more and more consumer electronic devices are equipped with the radio communication functionality.

A known very simply radio communication system comprises a transmitter with three transmit coils and a receiver with a single receive coil. Each transmit coil n is orientated orthogonally with respect to the other two coils and has a certain inductive coupling coefficient M[n] with the receive coil. Since the inductive coupling coefficient M[n] can vary dramatically depending on the relative orientation between the two coils, the transmitter aims to select the transmit coil with the highest coupling coefficient in order to obtain the best radio transmission link from the transmitter to the receiver. Preferably, the different transmit coils are oriented orthogonally with respect to each other in order to maximize the probability that at least one transmit coil will have a good coupling coefficient with respect to the receive coil. Although the usage of three coils is preferable, a transmitter being equipped with only two coils is also possible. However, the use of only two coils increases the probability that for a certain relative orientation between the transmitter and the receiver there may be no coil having a sufficiently large coupling coefficient with the receiver coil. It is further possible to provide a radio transmitter with more than three transmit coils at the expense of complexity. However, using more than three coils typically brings only a limited added value.

The use of more than one coil respectively more than one antenna on the transmitter side and/or on the receiver side means that different radio communication paths are established between transmitter and receiver. The corresponding radio transmission principle is called coil diversity. In order to positively utilize different radio communication paths so as to improve a radio communication, a suitable coil diversity scheme has to be employed.

A straightforward and well-known approach would be to transmit from each transmit coil sequentially in successive timeslots and have the receiver coil pick out the timeslot with the highest receive quality (i.e. the transmit coil with the highest inductive coupling coefficient). The disadvantage of this scheme is that it lowers the effective link throughput by a factor of three as the same data stream has to be sent from each transmit coil sequentially. This also increases the power consumption for the transmitter by a factor three as it needs to send the same data three times.

Another known approach is to have the receiver measure the quality of the link for each transmit coil and feed back the coil index with the highest coupling factor to the transmitter. A simpler approach for this scheme would be for the receiver to tell the transmitter to switch coils when the reception quality becomes too low. Both implementations of this scheme however require a feedback path from the receiver to the transmitter. This can only be guaranteed if there is a symmetrical link where the receiver can also sent messages back to the transmitter. However, in practical circumstances there are various reasons why there may be available only an asymmetrical link or a unidirectional link between the transmitter and the receiver.

US5600330, EP1947423 and US2007/0290846 each disclose devices for, orcapable of, measuring orientation using magnetic fields.

There may be a need for providing a feedback-free respectively an open loop adaptation of the radio cooling between a transmitter and a receiver, wherein the adaptation depends on the relative spatial orientation between a transmit coil of the transmitter and a receive coil of the receiver.

### OBJECT AND SUMMARY OF THE INVENTION

This need may be met by the subject matter according to the independent claims. Advantageous embodiments of the present invention are described by the dependent claims.

According to a first aspect of the invention there is provided a transmitter for transmitting a radio signal to a receiver, in particular for transmitting a magnetic or an electromagnetic radio signal. The provided transmitter comprises (a) a transmit coil for transmitting a radio signal, (b) a determining device for determining a spatial orientation of the transmit coil with respect to a reference direction and for providing an orientation signal being indicative for the determined spatial orientation of the transmit coil, and (c) a control unit for controlling the transmit coil in such a manner that the directional characteristic of the radio signal being transmitted by the transmitter depends on the orientation signal.

The described transmitter is based on the idea that the directional characteristic of a transmitted radio signal can be adjusted based on information about the spatial orientation of the transmitter and/or about the spatial orientation of the transmit coil. If the orientation of a receiver representing the recipient of the radio signal is known, the radio communication between the described transmitter and the receiver can be optimized without any feedback information about the quality of the radio link, which extends between the transmitter and the receiver. Thereby, it might be taken into account that the receiver comprises a receive coil and that the quality of the radio link respectively the quality of the radio channel between the transmitter and the receiver will be maximized if the transmit coil and the receive coil are oriented parallel with respect to each other.

The described transmitter may provide the advantage that the magnetic and/or electromagnetic coil coupling between the transmit coil and the receive coil can be optimized without any feedback information. Therefore, the radio communication can be optimized also for a unidirectional radio communication link. For improving the reliability of a radio communication there may be no need to reduce the data throughput, to increase the bandwidth and/or to increase the radio transmission power of the transmitter.

An optimization of the radio communication between the described transmitter and the receiver without any feedback information from the receiver may provide the advantage that also a receiver may be employed, which does not have a transmission functionality. A receiver without a transmitting functionality is for instance a hearing aid or a headset, which is exclusively receiving data signal corresponding to an audio signal being provided to a user.

Specifically, the described transmitter may be used for hearing aid applications where an external device such as an mp3 player or a remote control device streams audio data to the hearing aid(s), which is(are) placed at least at one side of the head of a user. This external device may be equipped with the described transmitter assuring a good coil coupling.

The described transmitter may also improve the radio communication link to a receiver, which is capable of transmitting feedback information with a limited transmission power such that the transmitter cannot be provided with the respective feedback respectively control information in order to optimize the directional characteristic of the radio signal being transmitted by the transmitter. Such a situation might occur for instance if the transmitter can generate more transmit power than the receiver. Therefore, the transmitter might be able to reach the receiver but due to the limited transmit power of the receiver, the reverse communication path cannot be established.

According to an embodiment of the invention the reference direction is the direction of gravity. This may provide the advantage that an unambiguous reference system for the orientation of the transmit coil and, if applicable for the orientation of the receive coil, can be used. Thereby, when uprisings of the earth's surface are neglected the reference direction is oriented perpendicular to the earth's surface. This makes it easy for many applications, in particular wherein the orientation of the receive coil is known with respect to the earth's surface, to properly adapt the directional characteristic of the radio signal being transmitted by the transmitter.

According to a further embodiment of the invention the determining device is an inclinometer. This may provide the advantage that a standard measurement instrument can be employed in order to realize the described transmitter. The inclinometer may also be called a tilt meter.

According to a further embodiment of the invention the inclinometer comprises a mechanical measurement instrument.

The mechanical measurement instrument may use for instance a weight, which is suspended in such a manner that the direction of gravity can be determined by the position of the weight with respect to an inner coordinate system of the inclinometer.

The mechanical measurement instrument may also comprise a curved tube filled with a damping liquid and a heavy object such as a ball, which is capable of moving thought the liquid filled tube. Thereby, the position of the ball with respect to the curved tube is indicative for the orientation of the curved tube.

The inclinometer may also be realized by a Micro-Electro-Mechanical Systems (MEMS). A MEMS may provide the advantage that the mechanical measurement instrument can be realized within a tiny size and with comparatively low cost.

According to a further embodiment of the invention the transmitter further comprises at least one further transmit coil for transmitting the radio signal, wherein the at least one further transmit coil and the transmit coil are oriented angled with respect to each other.

For the above described controlling of the directional characteristic of the radio signal it may be taken into account that there is a very high probability that good coil coupling is achieved when both the transmit coil and the receive coil are oriented parallel with respect to each other rather than when they are oriented orthogonal with respect to each other. In order to guarantee that the coils at the receiver and the transmitter are parallel, for transmitting the radio signal from (a) the transmit coil and (b) the at least one further transmit coil an appropriate coil is selected which has an orientation being as similar as possible with respect to the orientation of a receive coil which is supposed for picking up the radio signal on the receiver side.

For instance if it is known or at least expected that at the receiver side the receive coil is oriented parallel with respect to the earth's surface, at the transmitter side the coil which is oriented maximally parallel with respect to the earth's surface may be selected for transmitting the radio signal. In this respect it is mentioned that the orientation of the (further) transmit coil may be indicated with the plane, in which the respective coil winding(s) is(are) located.

Preferably, the described transmitter comprises two further transmit coils, a first further transmit coil and a second further transmit coil, wherein each transmit coil is at least substantially perpendicularly oriented with respect to the two other transmit coils. Thereby, independently from the orientation of the respective receive coil a suitable transmit coil can be selected for transmitting the radio signal, which suitable transmit coil comprises the most similar orientation with respect to the receive coil.

Generally speaking, the described transmitter may make use of the fact that the orientation of the receive coil in the receiver is mostly fixed and known a priori. By measuring the position angle / the orientation of the transmit device respectively the position with respect to the reference direction for instance through the use of inclinometers, one can select the coil of the transmit device whose orientation is maximally aligned with the orientation of the receive coil. This way, no feedback from the receiver to the transmitter is required and good coupling between the coils is automatically achieved.

According to a further embodiment of the invention the transmitter further comprises at least one further determining device for determining a spatial orientation of the at least one further transmit coil with respect to the reference direction and for providing at least one further orientation signal being indicative for the determined spatial orientation of the further transmit coil. Thereby, the control unit is adapted for selecting one of (a) the transmit coil and (b) the at least one further transmit coil based on the orientation signal and the at least one further orientation signal.

This may mean that respectively one determining device may be assigned to each transmit coil. In case altogether at least three transmit coils are employed it may be sufficient if each of the determining devices is capable of measuring a tilt angle with respect to one tilt axis. Thereby, the orientation of the tilt axis may be associated with the orientation of the respective transmit coil. Preferably, the orientation of the tilt axis is aligned with the normal vector of the plane of the coil winding(s).

Generally speaking, the activation respectively the selection of one transmit coil for transmitting the radio signal is performed based on three simple gravitation-based inclinometers which measure the angle of each transmit coil with respect to the orientation of the earth's gravitation field. Thereby, these three inclinometers may be each mounted parallel to the axis of each individual transmit coil.

According to a further embodiment of the invention the transmitter further comprises (a) a bearing supporting the transmit coil in a rotatable manner, and (b) an actuator, which is mechanically coupled to the transmit coil and which is adapted for changing the orientation of the transmit coil with respect to the reference direction based on the orientation signal. This may provide the advantage that the transmitter can also adapt the directional characteristic of the radio signal if the transmitter does not have multiple coils, but only possesses one transmit coil.

Preferably, the orientation of the transmit coil can be manipulated along the 3 axis by the use of mechanical actuators. In this case, the transmitter can rotate his transmit coil such that its orientation becomes maximally parallel with the receiving coil. This avoids the need for multiple coils while still delivering the benefits of transmission diversity.

According to a further aspect of the invention there is provided a receiver for receiving a radio signal from a transmitter, in particular for receiving a magnetic or an electromagnetic radio signal. The receiver comprises (a) a receive coil for receiving a radio signal, (b) a determining device for determining a spatial orientation of the receive coil with respect to a reference direction and for providing an orientation signal being indicative for the determined spatial orientation of the receive coil, and (c) a control unit for controlling the receive coil in such a manner that a directional characteristic for receiving the radio signal being received by the receiver depends on the orientation signal.

The described receiver is based on the idea that the directional receive characteristic for a radio signal can be adjusted based on information about the spatial orientation of the receiver and/or of the receive coil. In this respect the term directional receive characteristic may mean the sensitivity of the receiver for receiving radio signals from different directions. By controlling the receive coil this solid angle dependent sensitivity can be adapted in order to achieve a receive signal having a maximal signal strength.

If the orientation of transmit coil, which is transmitting the radio signal from a transmitter to the receiver, is known, the radio communication between the transmitter and the described receiver can be optimized without any feedback information. As has already been mentioned above the quality of the radio link respectively the quality of the radio channel extending between the transmitter and the receiver will be maximized if the transmit coil and the receive coil are oriented parallel with respect to each other.

It is pointed out that (a) an adaptation of the directional characteristic for receiving the radio signal can be carried out in the same way as (b) an adaptation of the directional characteristic for transmitting the radio signal. For a given design of a coil both directional characteristics only depend on the orientation of the coil. In this respect a transmission of a radio signal is physically completely symmetric to a reception of a radio signal. Therefore, the features of the above described embodiments of the transmitter can be applied mutatis mutandis also for the receiver. This holds in particular for two basically different adaptive reception principles A and B both representing a coil diversity scheme. According to the first reception principle A the receiver comprises at least two and preferably three coils, wherein each coil is oriented angularly and preferably perpendicular with respect to the other coil(s) and depending on the orientation signal the most appropriate coil is selected respectively activated for receiving the radio signal. According to the second reception principle B the receiver may comprise only one receive coil, wherein the orientation of the receive coil relative to a housing of the receiver can be adapted based on the orientation signal.

According to a further aspect of the invention there is provided a communication system comprising (a) a transmitter as set forth in any one of the embodiments described above and (b) a receiver for receiving the radio signal. The described communication system is based on the idea that the directional characteristic of the transmitted radio signal can be adjusted based on orientation information about the at least on transmit coil. If the orientation of the receiver is known, the radio communication between transmitter and receiver can be optimized without any feedback information about the quality of the radio link extending between transmitter and receiver. The best radio link quality may obtained if the transmit coil and the receive coil are oriented parallel with respect to each other.

According to a further embodiment of the invention the receiver is a component of a hearing aid. In this respect the term hearing aid may refer to any device, which can be used by a user in order to amplify acoustic signals such that they are better bearable by the user. In particular a hearing aid may be a medical apparatus, which can be attached to and/or inserted into a human ear. However, a hearing aid may not only be a so called acoustic hearing apparatus and/or a hearing device. Within this document the term hearing aid also includes a headphone.

During operation, a hearing aid is typically oriented with respect to the direction of gravity in a predefined direction. This holds at least as long as the head of the user of the hearing aid is in the normal upright position. Therefore, during operation the control unit of the transmitter can assume that the receive coil is oriented as usual.

With respect to a hearing aid receiver the transmitter may be implemented for instance in a remote control unit. The user of the hearing aid can use the remote control unit for instance in order to control the amplification and/or other acoustic properties of the hearing aid such as for instance the frequency distribution of frequency dependent amplification factors.

According to a further aspect of the invention there is provided a transmitter for transmitting a radio signal and a receiver as described above.

The described communication system is based on the idea that the receive directional characteristic of the receiver can be adjusted based on orientation information about the at least one receive coil, which is comprised by the receiver. If the orientation of the transmitter is known, the radio communication between transmitter and receiver can be optimized by aligning the (active) receive coil at least partially parallel with respect to the known orientation of the transmit coil.

According to a further aspect of the invention there is provided a method for transmitting a radio signal from a transmitter to a receiver. The provided transmitting method comprises (a) determining a spatial orientation of a transmit coil of the transmitter with respect to a reference direction, (b) providing an orientation signal being indicative for the determined spatial orientation of the transmit coil, and (c) controlling the transmit coil in such a manner that the directional characteristic of the radio signal being transmitted by the transmitter depends on the orientation signal.

According to a further aspect of the invention there is provided a method for receiving a radio signal from a transmitter by a receiver. The provided receiving method comprises (a) determining a spatial orientation of a receive coil of the receiver with respect to a reference direction, (b) providing an orientation signal being indicative for the determined spatial orientation of the receive coil, and (c) controlling the receive coil in such a manner that a directional characteristic for receiving the radio signal depends on the orientation signal.

The described radio communication methods, i.e. the method for transmitting a radio signal and the method for receiving a radio signal, are both based on the idea that an a priori knowledge about the orientation of a coil of the other side of the radio communication link may be used in order adapt the directional characteristic for radio signal transmission respectively radio signal reception. The adaptation of the directional characteristic with respect to a transmission /reception of radio signals is carried out based on an orientation signal, which is provided by a determining unit. The determining unit may be for instance an inclinometer.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the example of embodiment to be described hereinafter and are explained with reference to the example of embodiment. The invention will be described in more detail hereinafter with reference to an example of embodiment but to which the invention is not limited

### BRIEF DESCRIPTION OF THE DRAWINGS

The only figure shows a transmitter comprising three transmit coils, which are oriented perpendicular with respect to each other, and three inclinometers, wherein respectively one inclinometer is assigned to each transmit coils.

### DESCRIPTION OF EMBODIMENTS

The illustration in the drawing is schematically.

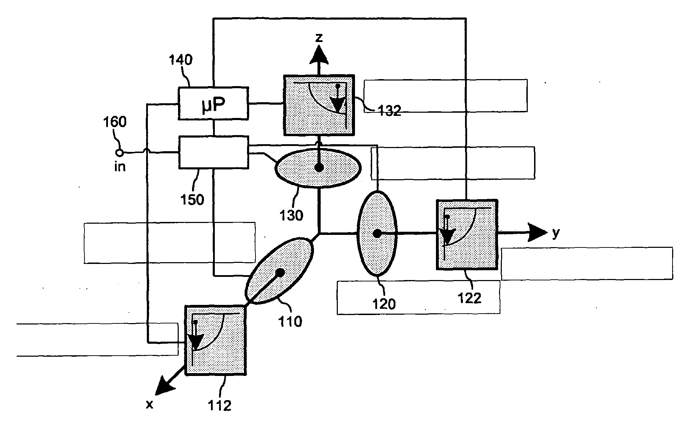

Figure 1 shows a transmitter 100, which comprises three transmit coils. A first transmit coil 110 is aligned with an x-axis, a second transmit coil 120 is aligned with an y-axis and a third transmit coil 130 is aligned with an z-axis. Each of the transmit coils 110, 120, 130 can be activated for transmitting a radio signal from the transmitter 100 to a non depicted receiver.

The transmitter 100 further comprises three inclinometers. A first inclinometer 112 is assigned to the first coil 110 and is adapted for measuring the rotational angle of the transmitter 100 with respect to the x-axis. A second inclinometer 122 is assigned to the second coil 120 and is adapted for measuring the rotational angle of the transmitter 100 with respect to the y-axis. A third inclinometer 132 is assigned to the first coil 130 and is adapted for measuring the rotational angle of the transmitter 100 with respect to the z-axis.

The transmitter 100 has an a priori knowledge about the orientation of a non depicted receive coil at the receiver side. According to the embodiment described here the receive coil is oriented parallel to the earth's surface. This means that the receive coil is oriented perpendicular to the direction of gravity.

Each of the inclinometers 112, 122, 132 generates an orientation signal, which is provided to a control unit 140. Based on the orientation signals from the inclinometers 112, 122 and 132 the control unit 140 selects one coil from the three coils 110, 120 and 130, which one coil has an orientation being aligned maximally parallel to the earth's surface. In the embodiment described here this selected coil is the transmit coil 130. The transmit coil 130 has a conductor loop being located in a plane, which is oriented perpendicular to the z-axis. In other words, the normal vector of this plane is parallel with the z-axis.

Selection information about the coil 130 is forwarded to a radio signal transmitting unit 150. As a consequence, the radio signal transmitting unit 150 feeds forward a radio signal, which is inputted at a radio signal input 160, to the activated transmit coil 130.

It is mentioned that the radio signal transmitting unit 160 may also be used to amplify and/or to modify the radio signal in an appropriate manner.

It has to be mentioned that for the sake of clarity in the Figure the ideal use case is shown, wherein the transmit coil 132 is oriented fully parallel with the earth's surface. This is however not required for the proposed scheme to function. Based on the measurements from the inclinometers 112, 122, 132 it is always possible to select a coil which is most parallel to the earth's surface, i.e. whose axis is maximally orthogonal to the earth's surface.

By implementing this selection scheme at the transmitter side, it can be guaranteed that the selected transmit coil is the one which is most parallel with the earth's surface. To guarantee that the receiver coil is maximally aligned in the same direction, the following two cases (A) and (B) can be distinguished:
(A) The receiver coil orientation with respect to the earth's surface is fixed. In this case, one can guarantee by design that the receiver coil axis is perpendicular to the earth's surface. This is for instance the case for hearing aids fixed to the patient's head, either in a behind-the-ear or in an in-the-ear configuration. Thereby it is taken into account that a patient's head is usually upright in most daily circumstances.
(B) The receiver coil orientation with respect to the earth's surface is variable. In this case, if the receiver has multiple coils as well, the same coil selection scheme as used by the transmitter 100 can be executed to select the receive coil whose axis is most perpendicular to the earth's surface.

It is noted that in the specific use case described here the three diversity coils 110, 120, 130 are implemented at the transmit side of a unidirectional communication system. According to the embodiment described here the transmitter 100 is comprised in a remote control for a hearing aid representing the receive side of the communication system. For describing the invention this embodiment has been selected, because at the moment it seems to be most favorable because a hearing aid, in particular a hearing aid which is supposed to be inserted into the ear of a patient, is heavily space-constrained. However, as has already been described above, a corresponding coil diversity could also be implemented at the receiver side. In this respect the radio signal transmitting unit 150 would have to be replaced by a corresponding radio signal receiving unit, which based on orientation information having been received from the three inclinometers 112, 122, 132 is activating a the most properly oriented receive coil for receiving a radio signal.

It is further noted that a communication system may also be realized by applying the described coil diversity scheme both to the transmitter and to the receiver.

It should be noted that the term "comprising" does not exclude other elements or steps and "a" or "an" does not exclude a plurality. It should also be noted that reference signs in the claims should not be construed as limiting the scope of the claims.

In order to recapitulate the above described embodiments of the present invention one can state: It is described an open-loop transmit coil diversity scheme, intended for communication based on magnetic induction, wherein the diversity scheme automatically aligns the transmit coil of a transmitter with the receive coil of a receiver without relying on feedback information from the receiver to the transmitter. This may be achieved by having a plurality of coils in the transmitter and/or in the receiver. Each of these coils may be oriented orthogonally with respect to the other coil(s). The optimal coil may be selected by measuring the position angle of the transmitter and/or the receiver by making use of at least one inclinometer. For radio communication on the transmitter and/or on the receiver this coil is selected, whose orientation is maximally parallel with the orientation of the corresponding coil on the other side of the radio communication link. Alternatively, if there is only one coil in the transmitter and/or the receiver, it may be possible to spatially adjust the orientation of the transmit coil and/or the receive coil by employing at least one mechanical actuator.

### Reference Numerals:

- 100: transmitter
- 110: coil
- 112: inclinometer
- 120: coil
- 122: inclinometer
- 130: coil
- 132: inclinometer
- 140: control unit
- 150: radio signal transmitting unit
- 160: radio signal input

## Claims

1. A transmitter for transmitting a radio signal to a receiver, in particular for transmitting a magnetic or an electromagnetic radio signal, the transmitter (100) comprising:
a transmit coil (130) for transmitting the radio signal,
a determining device (132)
for determining a spatial orientation of the transmit coil (130) with respect to a reference direction, the reference direction being the direction of gravity, and
for providing an orientation signal being indicative for the determined spatial orientation of the transmit coil (130), and
a control unit (140) for controlling the transmit coil (132) in such a manner that the directional characteristic of the radio signal being transmitted by the transmitter (100) depends on the orientation signal.

2. The transmitter as set forth in the preceding claim, wherein
the determining device is an inclinometer (132).

3. The transmitter as set forth in the preceding claim, wherein
the inclinometer (132) comprises a mechanical measurement instrument.

4. The Transmitter as set forth in any one of the preceding claims, further comprising
at least one further transmit coil (110, 120) for transmitting the radio signal,
wherein
the at least one further transmit coil (110, 120) and the transmit coil (130) are oriented angled with respect to each other.

5. The transmitter as set forth in claim 4, further comprising
at least one further determining device (112, 122)
for determining a spatial orientation of the at least one further transmit coil (110, 120) with respect to the reference direction and
for providing at least one further orientation signal being indicative for the determined spatial orientation of the further transmit coil (110, 120), wherein
the control unit (140) is adapted for selecting one of the transmit coil (130) and the at least one further transmit coil (110, 120) based on the orientation signal and the at least one further orientation signal.

6. The transmitter as set forth in any one of the preceding claims, further comprising
a bearing supporting the transmit coil (132) in a rotatable manner, and
an actuator,
which is mechanically coupled to the transmit coil (132) and
which is adapted for changing the orientation of the transmit coil (132) with respect to the reference direction based on the orientation signal.

7. A receiver for receiving a radio signal from a transmitter, in particular for receiving a magnetic or an electromagnetic radio signal, the receiver comprising:
a receive coil for receiving the radio signal,
a determining device
for determining a spatial orientation of the receive coil with respect to a reference direction, the reference direction being the direction of gravity, and
for providing an orientation signal being indicative for the determined spatial orientation of the receive coil, and
a control unit for controlling the receive coil in such a manner that a directional characteristic for receiving the radio signal being received by the receiver depends on the orientation signal.

8. A communication system comprising
a transmitter (100) as set forth in any one of the claims 1 to 6 for transmitting a radio signal and
a receiver for receiving the radio signal.

9. The communication system as set forth in claim 8, wherein
the receiver is a component of a hearing aid.

10. A communication system comprising
a Transmitter for transmitting a radio signal and
a receiver as set forth in claim 7 for receiving the radio signal.

11. A method for transmitting a radio signal from a transmitter (100) to a receiver, the method comprising
determining a spatial orientation of a transmit coil (130) of the Transmitter (100) with respect to a reference direction, the reference direction being the direction of gravity,
providing an orientation signal being indicative for the determined spatial orientation of the transmit coil (130), and
controlling the transmit coil (130) in such a manner that the directional characteristic of the radio signal being transmitted by the transmitter (130) depends on the orientation signal.

12. A method for receiving a radio signal from a transmitter by a receiver, the method comprising
determining a spatial orientation of a receive coil of the receiver with respect to a reference direction, the reference direction being the direction of gravity,
providing an orientation signal being indicative for the determined spatial orientation of the receive coil, and
controlling the receive coil in such a manner that a directional characteristic for receiving the radio signal depends on the orientation signal.

## Patentansprüche

1. Transmitter zum Übertragen eines Funksignals an einen Empfänger, insbesondere zum Übertragen eines magnetischen oder eines elektromagnetischen Funksignals, der Transmitter (100) aufweisend:
eine Übertragungsspule (130) zum Übertragen des Funksignals,
eine Bestimmungsvorrichtung (132)
zum Bestimmen einer räumlichen Ausrichtung der Übertragungsspule (130) in Bezug auf eine Referenzrichtung, wobei die Referenzrichtung die Richtung der Gravität ist, und
zum Bereitstellen eines Ausrichtungssignals, welches indikativ für die bestimmte räumliche Ausrichtung der Übertragungsspule (130) ist, und
eine Steuereinheit (140) zum Steuern der Übertragungsspule (132) in einer Art und Weise, dass die richtungsabhängige Charakteristik des Funksignals, welche mittels des Transmitters (100) übertragen wird, von dem Ausrichtungssignal abhängt.

2. Transmitter wie in dem vorhergehenden Anspruch dargelegt, wobei die Bestimmungsvorrichtung ein Inklinometer (132) ist.

3. Transmitter wie in dem vorhergehenden Anspruch dargelegt, wobei die Bestimmungsvorrichtung (132) ein mechanisches Messinstrument aufweist.

4. Transmitter wie in irgendeinem der vorhergehenden Ansprüche dargelegt, ferner aufweisend
zumindest eine weitere Übertragungsspule (110, 120) zum Übertragen des Funksignals, wobei
die zumindest eine weitere Übertragungsspule (110, 120) und die Übertragungsspule (130) in Bezug auf einander winkelig ausgerichtet sind.

5. Transmitter wie in Anspruch 4 dargelegt, ferner aufweisend
zumindest eine weitere Bestimmungsvorrichtung (112, 122)
zum Bestimmen einer räumlichen Ausrichtung von der zumindest einen weiteren Übertragungsspule (110, 120) in Bezug auf die Referenzrichtung und
zum Bereitstellen zumindest eines weiteren Ausrichtungssignals, welches für die bestimmte räumliche Ausrichtung der weiteren Übertragungsspule (110, 120) indikativ ist, wobei die Steuereinheit (140) adaptiert ist zum Auswählen von einer der Übertragungsspule (130) und der zumindest einen weiteren Übertragungsspule (110, 120) basierend auf dem Ausrichtungssignal und dem zumindest einen weiteren Ausrichtungssignal.

6. Transmitter wie in irgendeinem der vorhergehenden Ansprüche dargelegt, ferner aufweisend
ein Lager, welches die Übertragungsspule (132) in einer rotierbaren Art und Weise unterstützt, und
einen Aktuator,
welcher mechanisch an die Übertragungsspule (132) gekoppelt ist und welcher adaptiert ist, um die Ausrichtung der Übertragungsspule (132) in Bezug auf die Referenzrichtung basierend auf dem Ausrichtungssignal zu verändern.

7. Empfänger zum Empfangen eines Funksignals von einem Transmitter, insbesondere zum Empfangen eines magnetischen oder elektromagnetischen Funksignals, der Empfänger aufweisend:
eine Empfängerspule zum Empfangen des Funksignals,
eine Bestimmungsvorrichtung
zum Bestimmen einer räumlichen Ausrichtung der Empfängerspule in Bezug auf eine Referenzrichtung, wobei die Referenzrichtung die Richtung der Gravität ist, und
zum Bereitstellen eines Ausrichtungssignals, welches indikativ für die bestimmte räumliche Ausrichtung der Empfängerspule ist, und
eine Steuereinheit zum Steuern der Empfängerspule in einer Art und Weise, dass eine richtungsabhängige Charakteristik zum Empfangen des Funksignals, welches mittels des Empfängers empfangen wird, von dem Ausrichtungssignal abhängt.

8. Kommunikationssystem aufweisend
einen Transmitter (100) wie in irgendeinem der Ansprüche 1 bis 6 dargelegt zum Übertragen eines Funksignals und
einen Empfänger zum Empfangen des Funksignals.

9. Kommunikationssystem wie in Anspruch 8 dargelegt, wobei der Empfänger eine Komponente von einem Hörgerät ist.

10. Kommunikationssystem aufweisend
einen Transmitter zum Übertragen eines Funksignals und
einen Empfänger wie in Anspruch 7 dargelegt zum Empfangen des Funksignals.

11. Verfahren zum Übertragen eines Funksignals von einem Transmitter (100) zu einem Empfänger, das Verfahren aufweisend
Bestimmen einer räumlichen Ausrichtung einer Übertragungsspule (130) des Transmitters (100) in Bezug auf eine Referenzrichtung, wobei die Referenzrichtung die Richtung der Gravität ist,
Bereitstellen eines Ausrichtungssignals, welches indikativ für die bestimmte räumliche Ausrichtung der Übertragungsspule (130) ist, und
Steuern der Übertragungsspule (130) in einer Art und Weise, dass die richtungsabhängige Charakteristik des Funksignals, welches mittels des Transmitters (130) übertragen wird, von dem Ausrichtungssignal abhängt.

12. Verfahren zum Empfangen eines Funksignals von einem Transmitter mittels eines Empfängers, das Verfahren aufweisend
Bestimmen einer räumlichen Ausrichtung einer Empfängerspule des Empfängers in Bezug auf eine Referenzrichtung, wobei die Referenzrichtung die Richtung der Gravität ist,
Bereitstellen eines Ausrichtungssignals, welches indikativ für die bestimmte räumliche Ausrichtung der Empfängerspule ist, und
Steuern der Empfängerspule in einer Art und Weise, dass eine richtungsabhängige Charakteristik zum Empfangen des Funksignals von dem Ausrichtungssignal abhängt.

## Revendications

1. Emetteur pour émettre un signal radio vers un récepteur, en particulier pour émettre un signal radio magnétique ou électromagnétique, l'émetteur (100° comprenant :
une bobine d'émission (130) pour émettre le signal radio,
un dispositif de détermination (132)
pour déterminer une orientation spatiale de la bobine d'émission (130) par rapport à une direction de référence, la direction de référence étant la direction de la gravité, et pour fournir un signal d'orientation indicatif de l'orientation spatiale déterminée de la bobine d'émission (130), et
une unité de commande (140) pour contrôler la bobine d'émission (132) de telle sorte que les caractéristiques directionnelles du signal radio qui est émis par l'émetteur (100) dépendent du signal d'orientation.

2. Emetteur selon la revendication précédente, dans lequel le dispositif de détermination est un inclinomètre (132).

3. Emetteur selon la revendication précédente, dans lequel l'inclinomètre (132) comporte un instrument de mesure mécanique.

4. Emetteur selon l'une quelconque des revendications précédentes, comprenant en outre
au moins une autre bobine d'émission (110, 120) pour l'émission du signal radio,
dans lequel
l'autre bobine d'émission au moins (110, 120) et la bobine d'émission (130) sont orientées dans des directions formant un angle l'une par rapport à l'autre.

5. Emetteur selon la revendication 4, comprenant en outre
au moins un autre dispositif de détermination (112, 122) pour déterminer une orientation spatiale de l'autre bobine d'émission au moins (110, 120) par rapport à une direction de référence, et
pour fournir au moins un autre signal d'orientation indicatif de l'orientation spatiale déterminée de l'autre bobine d'émission (110, 120), dans lequel l'unité de commande (140) est agencée de manière à sélectionner l'une des bobines parmi la bobine d'émission (130) et l'autre bobine d'émission au moins (110, 120) en fonction du signal d'orientation et de l'autre signal d'orientation au moins.

6. Emetteur selon l'une quelconque des revendications précédentes, comprenant en outre
un palier support de la bobine d'émission (132) de manière à lui permettre de tourner, et
un actionneur,
qui est couplé mécaniquement à la bobine d'émission (132), et
qui est agencé de manière à modifier la direction de la bobine d'émission (132) par rapport à la direction de référence en fonction du signal d'orientation.

7. Récepteur pour recevoir un signal radio d'un émetteur, en particulier pour recevoir un signal radio magnétique ou électromagnétique, le récepteur comprenant :
une bobine de réception pour recevoir le signal radio,
un dispositif de détermination
pour déterminer une orientation spatiale de la bobine de réception par rapport à une direction de référence, la direction de référence étant la direction de la gravité, et pour fournir un signal d'orientation indicatif de l'orientation spatiale déterminée de la bobine de réception, et
une unité de commande pour contrôler la bobine de réception de telle sorte que les caractéristiques directionnelles de réception du signal radio qui est reçu par le récepteur dépendent du signal d'orientation.

8. Système de communication comprenant
un émetteur (100) selon l'une quelconque des revendication 1 à 6 pour émettre un signal radio et
un récepteur pour recevoir le signal radio.

9. Système de communication selon la revendication 8, dans lequel le récepteur est un élément d'un système d'assistance auditive.

10. Système de communication comprenant
un émetteur pour émettre un signal radio et
un récepteur selon la revendication 7 pour recevoir le signal radio.

11. Procédé d'émission d'un signal radio d'un émetteur (100) vers un récepteur, le procédé comprenant :
la détermination d'une orientation spatiale d'une bobine d'émission (130) de l'émetteur (100) par rapport à une direction de référence, la direction de référence étant la direction de la gravité,
la fourniture d'un signal d'orientation indicatif de l'orientation spatiale déterminée de la bobine d'émission (130), et
le contrôle de la bobine d'émission (130) de telle sorte que les caractéristiques directionnelles du signal radio qui est émis par l'émetteur (130) dépendent du signal d'orientation.

12. Procédé de réception d'un signal radio d'un émetteur par un récepteur, le procédé comprenant :
la détermination d'une orientation spatiale d'une bobine de réception du récepteur par rapport à une direction de référence, la direction de référence étant la direction de la gravité,
la fourniture d'un signal d'orientation indicatif de l'orientation spatiale déterminée de la bobine de réception, et
le contrôle de la bobine de réception de telle sorte que les caractéristiques directionnelles de réception du signal radio dépendent du signal d'orientation.
